(19) **Europäisches Patentamt European Patent Office Office européen des brevets**

(11) **EP 1 802 960 B1**

(12) **FASCICULE DE BREVET EUROPEEN**

(45) Date de publication et mention
de la délivrance du brevet:
**06.07.2011 Bulletin 2011/27**

(21) Numéro de dépôt: **05815854.4**

(22) Date de dépôt: **19.10.2005**

(51) Int Cl.:
*G01N 21/53* (2006.01)    *G01S 17/95* (2006.01)

(86) Numéro de dépôt international:
**PCT/FR2005/050867**

(87) Numéro de publication internationale:
**WO 2006/043003 (27.04.2006 Gazette 2006/17)**

(54) **DISPOSITIF DE MESURE DE DISTANCE DE VISIBILITE**

GERÄT ZUR MESSUNG DER SICHTWEITE

SIGHT DISTANCE MEASURING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.10.2004 FR 0411061**

(43) Date de publication de la demande:
**04.07.2007 Bulletin 2007/27**

(73) Titulaires:
• **Laboratoire Central des Ponts et Chaussées**
**75015 Paris (FR)**
• **INSTITUT NATIONAL DE RECHERCHE SUR LES TRANSPORTS ET LEUR SECURITE (INRETS)**
**94110 Arcueil (FR)**

(72) Inventeurs:
• **HAUTIERE, Nicolas**
**F-75015 PARIS (FR)**
• **LABAYRADE, Raphaël**
**F-78000 VERSAILLES (FR)**
• **AUBERT, Didier**
**F-91540 MENNECY (FR)**

(74) Mandataire: **Intès, Didier Gérard André et al**
**Cabinet Beau de Loménie**
**158, rue de l'Université**
**75340 Paris Cedex 07 (FR)**

(56) Documents cités:
**FR-A- 2 847 367**        **US-A- 5 987 152**
**US-A1- 2003 197 867**    **US-B1- 6 208 938**
**US-B1- 6 362 773**

**Description**

La présente invention a pour objet un dispositif de mesure de distance de visibilité, notamment mais non exclusivement destiné à être monté sur un véhicule.

La définition généralement retenue de la distance de visibilité et plus particulièrement de la distance de visibilité météorologique est la suivante : c'est la distance au-delà de laquelle un objet noir de dimension convenable est perçu avec un contraste inférieur à une valeur prédéterminée de l'ordre de 2 à 5 %. En outre, on définit communément le contraste entre deux objets par la formule de Michelson :

$$C = \frac{L_{max} - L_{min}}{L_{max} + L_{min}}$$

Dans cette formule, $L_{max}$ désigne la luminance de l'objet le plus clair et $L_{min}$ la luminance de l'objet le plus sombre.

D'autres formules peuvent être utilisées, par exemple le contraste de Weber :

$$C = \frac{L_{max} - L_{min}}{L_{min}}$$

Le calcul de la distance de visibilité, et plus précisément de visibilité météorologique, présente deux intérêts au moins. Tout d'abord, la mesure de la distance de visibilité elle-même permet de fournir par exemple au conducteur d'un véhicule une information qui lui permettra d'adapter sa conduite aux conditions de visibilité. D'autre part, la mesure de distance de visibilité météorologique ne sert pas qu'à un système de détection d'objets. Plus généralement, elle peut servir à toute aide à la conduite nécessitant une perception de certains composants de l'environnement, par exemple à une application de détection de la route.

L'utilisation de la mesure de distance de visibilité météorologique pour les aides à la conduite ne se réduit pas à régler le capteur de mesures. L'aide à la conduite, ayant connaissance de la visibilité, peut par exemple avertir le conducteur que son fonctionnement est dégradé ou encore qu'elle est désactivée car se trouvant en dehors de son domaine de fonctionnement.

On connaît grâce aux documents US 2003/0197867, US 6362773, et US 6208938 différents dispositifs pour calculer une distance de visibilité.

Le premier document (US2003/0197867) propose ainsi plusieurs dispositifs.

Un premier dispositif est un dispositif comprenant une caméra installée à poste fixe, devant laquelle sont disposées des cibles spécifiques, à différentes distances.

A partir d'une image prise par la caméra, le dispositif établit une courbe représentative des niveaux de contraste pour les différentes cibles, en fonction de la distance. Pour chaque cible, le niveau de contraste retenu est calculé en faisant la moyenne des contrastes d'un pourcentage prédéterminé des pixels de plus haut contraste, dans la cible considérée ; le contraste étant calculé pour chaque pixel de cette cible.

Sur la base de cette courbe, le dispositif détermine une distance de visibilité.

On comprend que le dispositif doit, dans l'image, identifier les différentes cibles afin de calculer le niveau de contraste pour celles-ci.

Selon une variante de ce dispositif, lors de l'identification des cibles, et bien que la position dans l'image des différentes cibles soit connue a priori, la cible la plus proche de la caméra est identifiée en premier dans l'image. Cette cible est en effet la plus facile à identifier dans l'image. Cette précaution vise à assurer l'identification correcte des cibles dans l'image, même si la caméra a bougé par rapport à la scène.

Le premier document précité présente également un dispositif de détermination de la visibilité relative, à l'aide d'une caméra. Ce dispositif ne requiert pas l'utilisation de cibles spécifiques.

Ce dispositif permet de déterminer, soit pour l'ensemble d'une image prise par la caméra, soit pour seulement des portions de cette image, la visibilité relative. Il s'agit d'un ratio entre la visibilité constatée dans l'image, et une visibilité de référence. Eventuellement, la distance entre les différentes portions d'image et la caméra peut également être déterminée, ce qui permet au dispositif de fournir l'information de visibilité relative en fonction de la distance.

Un objet de la présente invention est de fournir un dispositif susceptible d'être embarqué sur un véhicule qui permette, dans toutes les situations de visibilité, de calculer la distance de visibilité météorologique pour l'environnement du véhicule.

Pour atteindre ce but, selon l'invention, le dispositif de détermination de la distance de visibilité dans un paysage comprend :

- une caméra pour prendre une image dudit paysage pour lequel la distance de visibilité doit être déterminée ;
- des moyens pour mémoriser ladite image ;

le dispositif étant caractérisé en ce qu'il comprend en outre :

- des moyens de traitement de l'image pour détecter si un pixel de l'image présente un contraste supérieur à une valeur prédéterminée par rapport à au moins certains des pixels adjacents ;
- des moyens pour appliquer successivement aux pixels de l'image ledit traitement de détection de contraste depuis le pixel correspondant à la plus grande distance entre un point du paysage et la caméra, et jusqu'à ce qu'un pixel dit premier pixel soit détecté comme présentant un contraste satisfaisant à la condition de contraste,

- des moyens pour associer à chaque pixel de l'image une information représentative de la distance entre le point du paysage correspondant audit pixel et la caméra, par quoi on obtient une carte des distances, lesdits moyens consistant en des moyens choisis dans le groupe comprenant soit une autre caméra apte à prendre une deuxième image du même paysage sous un angle différent pour obtenir un effet de stéréo-vision et des moyens de traitement des pixels des deux images pour en déduire une information représentative de la distance de chaque pixel de la première image, soit des moyens de télémétrie aptes à balayer ledit paysage pour associer à chaque pixel de l'image une information représentative de la distance ; et

- des moyens pour associer audit premier pixel une information de distance à partir de ladite carte de distances, cette information de distance étant la distance de visibilité.

On comprend que le dispositif de détermination de distance de visibilité comprend une caméra pour prendre une image du paysage dans lequel on veut déterminer ladite distance, des moyens pour associer à chaque pixel de l'image une information représentative de la distance entre le point du paysage correspondant au pixel et la caméra et des moyens de traitement de ces informations. Les moyens de traitement permettent de mettre en oeuvre un algorithme de mesure de contraste appliquant la formule de Michelson ou toute autre formule de contraste et des moyens pour appliquer successivement aux pixels de l'image le traitement de détection de contraste par balayage de l'image depuis le de l'image une information représentative de la distance entre le point du paysage correspondant au pixel et la caméra et des moyens de traitement de ces informations. Les moyens de traitement permettent de mettre en oeuvre un algorithme de mesure de contraste appliquant la formule de Michelson ou toute autre formule de contraste et des moyens pour appliquer successivement aux pixels de l'image le traitement de détection de contraste par balayage de l'image depuis le pixel correspondant à la plus grande distance par rapport à la caméra jusqu'à ce qu'un pixel soit détecté comme présentant un contraste supérieur à la valeur prédéterminée. La distance entre le point du paysage correspondant au premier pixel présentant le contraste prédéterminé et la caméra fournit la distance de visibilité et plus précisément la distance de visibilité météorologique.

Selon l'invention, et dans le premier des deux modes de mise en oeuvre de l'invention, les moyens pour associer à chaque pixel de l'image une information représentative de la distance comprennent une deuxième caméra de prise d'images. L'information représentative de la distance est alors extraite des moyens connus de l'image en stéréovision que l'on obtient ainsi à l'aide des deux caméras.

Selon le deuxième mode de mise en oeuvre de l'invention, les moyens pour associer à chaque pixel de l'image une information représentative de la distance comprennent un dispositif de télémétrie pour balayer le paysage devant la caméra. On peut ainsi associer à chaque pixel de l'image une information représentative de la distance par rapport à la caméra fournie par le dispositif de télémétrie.

D'autres caractéristiques et avantages de l'invention apparaîtront mieux à la lecture de la description qui suit de plusieurs modes de mises en oeuvre de l'invention donnés à titre d'exemples non limitatifs.

- La figure 1 est une vue simplifiée du premier mode de mise en oeuvre du dispositif de mesure de distance de visibilité ;
- La figure 2 est un organigramme du procédé de traitement mis en oeuvre par le dispositif ;
- La figure 3 est une vue simplifiée du deuxième mode de mise en oeuvre du dispositif de mesure de distance de visibilité.

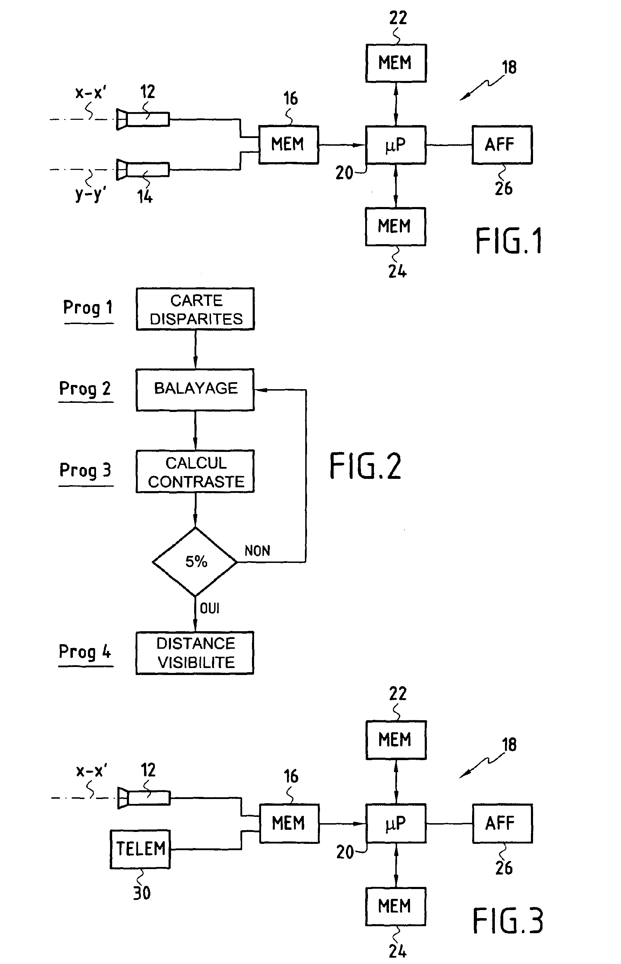

En se référant tout d'abord à la figure 1, on va décrire le premier mode de réalisation du dispositif de mesure de distance de visibilité dans le cas où il est monté sur un véhicule. On a représenté deux caméras 12 et 14 montées à l'avant du véhicule, et dont les axes x, x' et y, y' sont orientés de telle manière que l'ensemble des deux caméras 12 et 14 fournissent une image en stéréovision du paysage devant le véhicule. Le plus souvent, le paysage contient la route sur laquelle se déplace le véhicule. De préférence, les caméras 12 et 14 sont des caméras numériques qui délivrent donc directement les informations relatives aux différents pixels de l'image sous forme numérique. On pourrait également utiliser des caméras analogiques en les associant à des convertisseurs analogiques numériques. Les informations numériques correspondant aux images prises respectivement par les caméras 12 et 14 sont stockées dans une mémoire 16.

Le traitement des informations relatives à ces deux images est réalisé par un ensemble de traitements 18, constitué essentiellement par un microprocesseur 20, une mémoire de programme 22 et une mémoire de données 24. La mémoire de programme 22 contient tout d'abord un programme Prog 1 d'élaboration d'une carte de disparités à partir des informations de pixels des deux images stockées dans la mémoire 16. La mémoire 22 comporte également un deuxième programme Prog 2 de calcul de contrastes entre un pixel de l'image et les pixels environnants par exemple par mise en oeuvre de la formule de Michelson. La mémoire 22 comporte un troisième programme Prog 3 de balayage des pixels de l'image du paysage pour mettre en oeuvre successivement, à l'aide du programme Prog 2, le calcul du contraste de chaque pixel. Enfin, un programme de détermination de distance de visibilité Prog 4 permet, lorsqu'un pixel de contraste voulu a été détecté, de calculer la distance effective entre le point du paysage associé à ce pixel et la position de la caméra pour obtenir ainsi cette distance de visibilité. Le dispositif de mesure comprend avantageusement enfin un système d'affichage 26 permettant d'afficher la distance de visibilité calculée précédemment.

On va maintenant expliquer les différentes étapes du traitement permettant d'obtenir la distance de visibilité. A l'aide du programme Prog 1, le microprocesseur 20 calcule une carte de disparités à partir des informations numériques correspondant aux deux images prises respectivement par les caméras 12 et 14. Cette carte de disparités contient donc des informations représentatives de la différence de position entre les images prises par les deux caméras d'un même point du paysage. L'élaboration de la carte de disparités est décrite dans "In-vehicle obstacles detection and characterization by stereovision, Raphael Labayrade, Didier Aubert, In Vehicle Cognitive Computer Vision Systems, ICVS, Gratz, 3 avril 2003."

La carte de disparités est stockée dans la mémoire de données 24 et constitue la carte de distances. Il faut bien sûr réaliser un calibrage initial de l'installation de mesure. A partir de la carte de disparités, le programme de balayage Prog 3 balaye successivement les pixels de l'image en commençant par les pixels correspondant à la distance la plus importante par rapport à la caméra. Pour chaque pixel, le programme Prog 2 de calculs de contrastes est mis en oeuvre. Le programme Prog 2 met en oeuvre l'algorithme correspondant à la formule de Michelson qui a été définie précédemment ou de toute autre formule de mesure de contraste choisie. Pour calculer le contraste à partir de ces formules, on peut utiliser la méthode de Köhler décrite dans l'article de R. Köhler "A segmentation technique based on tresholding CVGIP 15, 1981 pages 319-338. Dès qu'un pixel est associé à un contraste supérieur à une valeur prédéterminée, et qui est dans l'exemple considéré de 5 %, le programme Prog 4 interrompt le balayage et calcule à partir des informations contenues dans la carte de disparités stockée dans la mémoire 24, la distance effective entre la caméra et le point du paysage correspondant au pixel de l'image ayant le contraste requis. Cette distance est par exemple affichée sur le dispositif d'affichage 26. Bien entendu, le calcul de la distance effective nécessite un calibrage initial des informations fournies par les caméras.

Dans le cas où le dispositif est monté sur un véhicule automobile, l'information de distance de visibilité qui est bien sûr calculée à des intervalles de temps prédéterminés peut servir à commander automatiquement une partie du fonctionnement du véhicule. Par exemple, cette information pourra permettre de limiter la vitesse ou de contrôler la distance par rapport à un véhicule précédant le véhicule équipé du dispositif de mesure dans le cas où ce même véhicule est équipé de moyens de mesures de distances par rapport à un autre véhicule.

Comme on l'a déjà indiqué, cette valeur de distance de visibilité peut également être utilisée pour contrôler un dispositif de mesures de distances d'obstacles dont serait également équipé le véhicule.

Dans le deuxième mode de réalisation de l'invention, la seule différence avec le premier mode de réalisation consiste dans la définition des moyens qui permettent d'associer à chaque pixel de l'image une information représentative de la distance entre le point du paysage associé à un pixel et la caméra de prise d'images. Plus précisément, dans ce deuxième mode de réalisation, l'image en stéréovision est remplacée par une image simple et l'information de distance est fournie par un dispositif de télémétrie 30 qui balaye le paysage dont la caméra 12 a pris l'image. La mémoire associée aux moyens de traitement reçoit donc, d'une part, les informations numériques correspondant aux différents pixels de l'image prise et d'autre part les informations de distances fournies par le dispositif de télémétrie constituant la carte de distances. Bien entendu, la caméra et le dispositif de télémétrie doivent faire l'objet d'un calibrage initial. A partir de ces informations, le traitement réalisé par le microprocesseur 20 est celui qui a déjà été décrit en liaison avec les figures 1 et 2.

Plus précisément, la carte de disparités est remplacée par l'ensemble des informations de distances fournies par les moyens de télémétrie et le balayage de l'image en fonction de la distance est contrôlé à partir des informations fournies par le dispositif de télémétrie lui-même.

## Revendications

1. Dispositif de détermination de la distance de visibilité dans un paysage, comprenant:

   - une caméra (12) pour prendre une image dudit paysage pour lequel la distance de visibilité doit être déterminée;
   - des moyens (16) pour mémoriser ladite image;

   ledit dispositif étant **caractérisé en ce qu'**il comprend en outre :

   - des moyens (18) de traitement de l'image pour détecter si un pixel de l'image présente un contraste supérieur à une valeur prédéterminée par rapport à au moins certains des pixels adjacents;
   - des moyens (18) pour appliquer successivement aux pixels de l'image ledit traitement de détection de contraste, depuis le pixel correspondant à la plus grande distance entre un point du paysage et la caméra, et jusqu'à ce qu'un pixel dit premier pixel soit détecté comme présentant un contraste satisfaisant à la condition de contraste,

- des moyens pour associer à chaque pixel de l'image une information représentative de la distance entre le point du paysage correspondant audit pixel et la caméra, par quoi on obtient une carte des distances, lesdits moyens consistant en des moyens choisis dans le groupe comprenant soit une autre caméra (14) apte à prendre une deuxième image du même paysage sous un angle différent pour obtenir un effet de stéréovision et des moyens de traitement des pixels des deux images pour en déduire une information représentative de la distance de chaque pixel de la première image, soit des moyens de télémétrie (30) aptes à balayer ledit paysage pour associer à chaque pixel de l'image une information représentative de la distance ; et

- des moyens (18) pour associer audit premier pixel une information de distance à partir de ladite carte de distances, cette information de distance étant la distance de visibilité.

2. Dispositif selon la revendication 1, **caractérisé en ce que** ladite valeur prédéterminée correspond à un contraste de 2 à 5 %.

3. Dispositif selon l'une quelconque des revendications 1 ou 2, **caractérisé en ce qu'**il est monté sur un véhicule.

4. Application du dispositif selon l'une quelconque des revendications 1 à 3 à la détermination de la distance de visibilité dans un paysage contenant au moins une route.

## Claims

1. A device for determining visibility distance in a landscape, the device comprising:

    - a camera (12) for taking an image of said landscape in which visibility distance is to be determined;
    - means (16) for storing said image;

    said device being **characterized in that** it further comprises:

    - image processor means (18) for detecting whether a pixel of the image presents contrast greater than a predetermined value relative to at least some adjacent pixels;
    - means (18) for applying said contrast detection treatment successively to the pixels in the image starting with the pixel corresponding to the greatest distance between a point in the landscape and the camera and continuing to a pixel called the first pixel found to satisfy the contrast condition; and

    - means (18) for associating each pixel of the image with information representative of the distance between the camera and the point in the landscape corresponding to said pixel, thereby obtaining a map of distances; said means consisting in means in the group comprising either another camera (14) adapted to take a second image of the same landscape under a different angle to obtain a stereovision effect and processing means for processing the pixels of the two images in order to deduce therefrom information representative of the distance of each pixel in the first image, or telemeter means (30) for scanning said landscape in order to associate each pixel of the image with information representative of distance; and

    - means (18) for associating distance information with said first pixel from said map of distances, said distance information being the visibility distance.

2. A device according to claim 1, in which said predetermined value corresponds to contrast lying in the range 2% to 5%.

3. A device according to claim 1 or 2, the device being mounted on a vehicle.

4. Use of the device according to any one of claims 1 to 3, to determine the visibility distance in a landscape comprising at least one road.

## Patentansprüche

1. Vorrichtung zur Bestimmung der Sichtweite in einer Landschaft, umfassend:

    - eine Kamera (12) zum Aufnehmen eines Bildes der Landschaft, für die die Sichtweite bestimmt werden soll,
    - Mittel (16) zum Speichern des Bildes,

    wobei die Vorrichtung **dadurch gekennzeichnet ist, daß** sie ferner umfaßt:

    - Mittel (18) zum Verarbeiten des Bildes, um zu erkennen, ob ein Pixel des Bildes im Vergleich zu wenigstens einigen der benachbarten Pixel einen über einem vorbestimmten Wert liegenden Kontrast aufweist,
    - Mittel (18), um auf die Pixel des Bildes, von dem Pixel aus, das dem größten Abstand zwischen einem Punkt der Landschaft und der Kamera entspricht, die Verarbeitung zur Kontrastdetektion nacheinander und solange anzuwenden, bis ein sogenanntes erstes Pixel als einen die Kontrastbedingung erfüllenden Kontrast aufweisend detektiert wird,

- Mittel, um jedem Pixel des Bildes eine Information zuzuordnen, die für den Abstand zwischen dem dem Pixel entsprechenden Punkt der Landschaft und der Kamera repräsentativ ist, wodurch man eine Karte der Abstände erhält, wobei die Mittel aus Mitteln bestehen, die ausgewählt sind aus der Gruppe umfassend entweder eine weitere Kamera (14), die geeignet ist, ein zweites Bild der gleichen Landschaft unter einem anderen Winkel aufzunehmen, um einen Stereovision-Effekt zu erzielen, und Mittel zur Verarbeitung der Pixel der beiden Bilder, um hieraus eine für den Abstand eines jeden Pixels des ersten Bildes repräsentative Information abzuleiten, oder Fernmeßmittel (30), die geeignet sind, die Landschaft abzutasten, um jedem Pixel des Bildes eine für den Abstand repräsentative Information zuzuordnen, und

- Mittel (18), um dem ersten Pixel anhand der Abstandskarte eine Abstandsinformation zuzuordnen, wobei diese Abstandsinformation die Sichtweite ist.

2. Vorrichtung nach Anspruch 1, **dadurch gekennzeichnet, daß** der vorbestimmte Wert einem Kontrast von 2 bis 5 % entspricht.

3. Vorrichtung nach einem der Ansprüche 1 oder 2, **dadurch gekennzeichnet, daß** sie an einem Fahrzeug angebracht ist.

4. Anwendung der Vorrichtung nach einem der Ansprüche 1 bis 3 auf die Bestimmung der Sichtweite in einer wenigstens eine Straße enthaltenden Landschaft.

FIG.1

Prog 1 — CARTE DISPARITES

Prog 2 — BALAYAGE

Prog 3 — CALCUL CONTRASTE

FIG.2

5% NON

OUI

Prog 4 — DISTANCE VISIBILITE

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030197867 A
- US 6362773 B

- US 6208938 B

**Littérature non-brevet citée dans la description**

- **Raphael Labayrade ; Didier Aubert.** In-vehicle obstacles detection and characterization by stereovision. *Vehicle Cognitive Computer Vision Systems,* 03 Avril 2003

- **R. Köhler.** A segmentation technique based on tresholding. *CVGIP,* 1981, vol. 15, 319-338